(19) Europäisches Patentamt
European Patent Office
Office européen des brevets

(11) **EP 3 045 272 A1**

(12) **EUROPÄISCHE PATENTANMELDUNG**

(43) Veröffentlichungstag:
**20.07.2016 Patentblatt 2016/29**

(51) Int Cl.:
***B25J 9/16*** *(2006.01)*

(21) Anmeldenummer: **15151286.0**

(22) Anmeldetag: **15.01.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
• **Hamm, Carsten**
**91058 Erlangen (DE)**
• **Tauchmann, Sven**
**09119 Chemnitz (DE)**

(54) **Steuern einer Bearbeitungsmaschine mit einer ersten Anzahl von einstellbaren Maschinenachsen**

(57) Die Erfindung betrifft ein Verfahren zum Steuern einer Bearbeitungsmaschine (30) mit einstellbaren Maschinenachsen (18), welche eine erste Anzahl von Freiheitsgraden ermöglichen, wobei das Verfahren die Schritte umfasst:
- Erfassen von Steuerdaten für einen vorgegebenen Bewegungsablauf eines Endeffektors (14) der Bearbeitungsmaschine (30), wobei der vorgegebene Bewegungsablauf eine zweite Anzahl von Freiheitsgraden der Bearbeitungsmaschine (30) erfordert, wobei die zweite Anzahl kleiner als die erste Anzahl ist,
- Ermitteln von Maschinenachsenbewegungsdaten für die Bewegung der Maschinenachsen (18) zum Bereitstellen des vorgegebenen Bewegungsablaufs des Endeffektors (14) und
- Ausführen des vorgegebenen Bewegungsablaufs des Endeffektors (14) anhand der Maschinenachsenbewegungsdaten,
dadurch gekennzeichnet,
dass das Verfahren die folgenden Schritte umfasst:
- Erstellen einer Zielfunktion,
- Optimieren der Zielfunktion durch Verändern wenigstens einzelner der Maschinenachsenbewegungsdaten,
- Erzeugen von optimierten Maschinenachsenbewegungsdaten und
- Ausführen des vorgegebenen Bewegungsablaufs des Endeffektors (14) anhand der optimierten Maschinenachsenbewegungsdaten.

FIG 4

## Beschreibung

Die vorliegende Erfindung betrifft ein Verfahren zum Steuern einer Bearbeitungsmaschine mit einstellbaren Maschinenachsen, welche eine erste Anzahl von Freiheitsgraden ermöglichen, wobei das Verfahren die Schritte umfasst: Erfassen von Steuerdaten für einen vorgegebenen Bewegungsablauf eines Endeffektors der Bearbeitungsmaschine, wobei der vorgegebenen Bewegungsablauf eine zweite Anzahl von Freiheitsgraden der Bearbeitungsmaschine erfordert, wobei die zweite Anzahl um wenigstens 1 kleiner als die erste Anzahl ist, Ermitteln von Maschinenachsenbewegungsdaten für die Bewegung der Maschinenachsen zum Bereitstellen des vorgegebenen Bewegungsablaufs des Endeffektors und Ausführen des vorgegebenen Bewegungsablaufs des Endeffektors anhand der Maschinenachsenbewegungsdaten. Die Erfindung betrifft ferner ein Rechnerprogrammprodukt umfassend ein Programm für eine Rechnereinheit mit Programmkodeabschnitten eines Programms zum Ausführen der Schritte des Verfahrens. Weiterhin betrifft die Erfindung auch eine Steuereinheit zum Steuern einer Bearbeitungsmaschine mit einstellbaren Maschinenachsen, welche eine erste Anzahl von Freiheitsgraden ermöglichen, wobei die Steuereinheit eingerichtet ist, Steuerdaten für einen vorgegebenen Bewegungsablauf eines Endeffektors der Bearbeitungsmaschine zu erfassen, wobei der vorgegebene Bewegungsablauf eine zweite Anzahl von Freiheitsgraden der Bearbeitungsmaschine erfordert, wobei die zweite Anzahl um wenigstens 1 kleiner als die erste Anzahl ist, wobei die Steuereinheit ferner eingerichtet ist, Maschinenachsenbewegungsdaten für die Bewegung der Maschinenachsen zum Bereitstellen des vorgegebenen Bewegungsablaufs des Endeffektors zu ermitteln und den vorgegebenen Bewegungsablauf des Endeffektors anhand der Maschinenachsenbewegungsdaten auszuführen. Schließlich betrifft die Erfindung auch eine Bearbeitungsmaschine mit einstellbaren Maschinenachsen, welche eine erste Anzahl von Freiheitsgraden ermöglichen, sowie einer Steuereinheit.

Ein gattungsgemäßes Verfahren sowie eine gattungsgemäße Steuereinheit und eine gattungsgemäße Bearbeitungsmaschine sind dem Grunde nach aus der AT401746B bekannt. Bei diesem Stand der Technik wird eine von einem Manipulator eines Roboters abzufahrende Bahn in eine Vielzahl von zeitlich äquidistanten Bahnpunkten unterteilt. Für jeden Bahnpunkt beziehungsweise hiermit korrespondierend für jeden Zeitpunkt wird die jeweilige Roboterkonfiguration, das heißt, die relevanten Lagesollwerte aller lagegeregelten Maschinenachsen, ermittelt und in eine Tabelle eingetragen. Nach dem Vervollständigen der Tabelle, das heißt, erst nach dem Ermitteln der Roboterkonfiguration für alle Bahnpunkte, werden die lagegeregelten Maschinenachsen angesteuert.

Be- oder Verarbeitungsmaschinen mit redundanter Kinematik sind prinzipiell im Stand der Technik bekannt und im Einsatz. Bei Realisierung der Ansteuerung der gewünschten Bewegung zur Ausführung der gewünschten Bearbeitung beziehungsweise Verarbeitung brauchen kinematische Redundanzen derzeit nicht explizit behandelt zu werden. Insbesondere braucht keine manuelle oder regelbasierte Programmierung vorgenommen zu werden. Hersteller solcher Maschinen, das heißt, Hersteller von computer aided manufacturing (CAM)-Systemen stellen in der Regel Tools beziehungsweise Diagramme zur Verfügung, die eine manuelle Beeinflussung einer generierten Bewegung beziehungsweise Bahn ermöglichen, um Softwarelimits und Singularitäten umfahren zu können. Der Anwender muss bei diesen Maschinen die generierten Bahnpunkte und Orientierungen selbst verändern und im Anschluss durch eine Simulationsmethode auf Kollisionsfreiheit prüfen.

Insbesondere bleibt der Bahnkontext unberücksichtigt. Gattungsgemäße Bearbeitungsmaschinen beziehungsweise Steuereinheiten beziehungsweise Verfahren umfassen beziehungsweise betreffen auch Roboter. Unter dem Begriff "Redundant" im Sinne dieser Offenbarung soll verstanden werden, dass die Struktur der Bearbeitungsmaschine mehr Freiheitsgrade aufweist, als sie für die Bewegung im Rahmen des gewünschten Bearbeitungsauftrags erforderlich sind.

Im Stand der Technik ist es üblich, dass im Rahmen einer Anwenderprogrammierung eine explizite Programmierung sämtlicher lagegeregelter Maschinenachsen erfolgt, so dass eine Nutzung der Redundanz nicht vorliegt. Aus der AT401746B ist es darüber hinaus bekannt, lediglich die gewünschte Bearbeitungsaufgabe zu programmieren, das heißt, die vom Endeffektor auszuführende Bewegung beziehungsweise anzufahrenden Bahnpunkte, und zur Auflösung der Unbestimmtheit zusätzliche Randbedingungen zu definieren beziehungsweise vorzugeben, um die Redundanz aufzulösen. Die Randbedingungen sollen bei der Ermittlung des Bewegungsablaufs beziehungsweise von Lagesollwerten eingehalten werden.

Auch wenn sich die Vorgehensweise der AT401746B bewährt hat, so besteht dennoch Verbesserungsbedarf. Die fest vorgegebene Randbedingung, die einem Lagewert entspricht, ist unflexibel und nutzt die Möglichkeiten der Redundanz nicht aus.

Es ist deshalb die Aufgabe der Erfindung, ein Verfahren, ein Rechnerprogrammprodukt zur Ausführung des Verfahrens, eine Steuereinheit und eine Bearbeitungsmaschine dahingehend weiterzubilden, dass ein verbessertes Steuern der Bearbeitungsmaschine erreicht werden kann.

Als Lösung wird mit der Erfindung ein Verfahren gemäß dem unabhängigen Anspruch 1 vorgeschlagen. Ferner wird mit dem weiteren unabhängigen Anspruch 7 ein entsprechendes Rechnerprogrammprodukt vorgeschlagen. Mit dem weiteren unabhängigen Anspruch 9 wird eine entsprechende Steuereinheit sowie mit dem weiteren unabhängigen Anspruch 10 eine Bearbeitungsmaschine vorgeschlagen. Weitere vorteilhafte Ausgestaltungen der Erfindung ergeben sich durch Merkmale der abhängigen Ansprüche.

Mit der Erfindung wird verfahrensseitig insbesondere vorgeschlagen, dass das Verfahren die folgenden Schritte umfasst: Erstellen einer Zielfunktion, Optimieren der Zielfunktion durch Verändern wenigstens einzelner der Maschinenachsenbewegungsdaten, Erzeugen von optimierten Maschinenbewegungsdaten und Ausführen des vorgegebenen Bewegungsablaufs des Endeffektors anhand der optimierten Maschinenachsenbewegungsdaten.

Bezüglich des Rechnerprogrammprodukts wird vorgeschlagen, dass das Programm für eine Rechnereinheit mit Programmkodeabschnitten eines Programms zum Ausführen der Schritte des Verfahrens gemäß der Erfindung ausgebildet ist, wenn das Programm durch die Rechnereinheit ausgeführt wird, so dass die Rechnereinheit wenigstens eine optimierte Zielfunktion ermittelt. Die Rechnereinheit kann separat von der Bearbeitungsmaschine ausgebildet sein. Vorzugsweise steht die Rechnereinheit über ein Kommunikationsnetzwerk mit der Bearbeitungsmaschine, insbesondere deren Steuereinheit, in Kommunikationsverbindung. Sie kann aber auch Bestandteil der Bearbeitungsmaschine, insbesondere der Steuereinheit der Bearbeitungsmaschine, sein.

Steuereinheitsseitig wird vorgeschlagen, dass die Steuereinheit eingerichtet ist, eine Zielfunktion zu erstellen, die Zielfunktion durch Verändern wenigstens einzelner der Maschinenachsenbewegungsdaten zu optimieren, optimierte Maschinenachsenbewegungsdaten zu erzeugen und den vorgegebenen Bewegungsablauf des Endeffektors anhand der optimierten Maschinenachsenbewegungsdaten auszuführen.

Bearbeitungsmaschinenseitig wird vorgeschlagen, dass die Steuereinheit gemäß der Erfindung ausgebildet ist.

Mit der Erfindung ist es erstmals möglich, eine Redundanz der Bearbeitungsmaschine dazu zu nutzen, weitere ergänzende Bedingungen zu berücksichtigen und zu optimieren. Zu diesem Zweck ist es gemäß der Erfindung vorgesehen, dass Maschinenachsenbewegungsdaten verändert werden können, um eine Zielfunktion, die ergänzend vorgegeben wird, zu minimieren beziehungsweise zu optimieren. Dadurch kann ein zusätzlicher Bonuseffekt erreicht werden, der über die Ausführung des reinen gewünschten Bewegungsablaufs zum Zwecke der Bearbeitung durch die Bearbeitungsmaschine hinausgeht. Optimieren im Sinne dieser Offenbarung kann sowohl ein Minimieren als auch ein Maximieren der Zielfunktion sein, und zwar abhängig davon, wie die Zielfunktion bestimmt ist und welche zu optimierenden Parameter sie umfasst.

Die Erfindung beschreibt somit Lösungen zur Steuerung von Bebeziehungsweise Verarbeitungsmaschinen, beispielsweise Industrierobotern, mit redundanter Kinematik. Eine Maschinenstruktur der Be- oder Verarbeitungsmaschine weist dabei aufgrund der Maschinenachsen mehr Freiheitsgrade auf, als für die eigentliche Bearbeitungsaufgabe hinsichtlich der Bewegung dem Grunde nach erforderlich wären. Der Anwender erstellt in gewohnter Weise, beispielsweise mittels eines Computer-Aided-Manufactoring-(CAM)-Systems oder durch Programmieren der Steuereinheit, ein Numeric Controlled (NC)-Programm für die Be- oder Verarbeitungsmaschine. Die überzähligen Freiheitsgrade brauchen gemäß der Erfindung nicht vom Anwender explizit programmiert zu werden, sondern können von der Steuereinheit vorteilhaft genutzt werden, um zum Beispiel folgende Aufgaben ergänzend zu behandeln:

1. Die Be- oder Verarbeitungsmaschine hat eine Singularität beziehungsweise ein Software-Limit, die beziehungsweise das erst bei einer Simulation beziehungsweise beim Einfahren des NC-Programms an der Be- oder Verarbeitungsmaschine erkannt wird. Es erfordert eine zeitaufwändige trial-and-error-Programmierung durch den Anwender, um die Maschine so einzustellen, dass ein fehlerfreies Ablaufen des NC-Programms ermöglicht ist.

2. Die Steifigkeit der Be- oder Verarbeitungsmaschine ist von ihrer Stellung abhängig. Messungen an verschiedenen Robotern haben beispielsweise gezeigt, dass die Steifigkeit an einem Tool Center Point (TCP) zum Roboterfußpunkt und radial zum Roboter umso größer ist, je kleiner der Abstand des TCP vom Roboterfußpunkt ist. Für die Bearbeitung mit einem Roboter ist diese Tatsache sehr wichtig. Im Stand der Technik ist es dem Anwender überlassen, diese Abhängigkeit zu erkennen und bei der Programmierung zu berücksichtigen.

Die Erfindung vermeidet die eingangs vorgeschriebene Problematik, indem sie eine Zielfunktion unter Ausnutzung der mindestens einen Redundanz und unter Berücksichtigung von verschiedenen Randbedingungen minimiert beziehungsweise optimiert. Randbedingungen können beispielsweise Bahn- und/oder Orientierungstreue sein. Je nach Definition der Zielfunktion kann anstelle des Minimierens auch ein Maximieren vorgesehen sein. Dem Grunde nach dürfte es in der Regel möglich sein, eine Zielfunktion, die zu Maximieren ist, durch eine geeignete Transformation beziehungsweise Umwandlung in eine Zielfunktion umzuwandeln, die zu Minimieren ist. Ein Optimieren kann insbesondere vorgesehen sein, wenn die Zielfunktion mehrere Parameter umfasst, die zugleich optimiert werden, wobei nicht alle gleichzeitig minimiert werden können.

Ein Aspekt der Erfindung basiert auf der Ausnutzung der mindestens einen Redundanz zur Optimierung einer Zielfunktion. Die Zielfunktion betrifft vorzugsweise die gesamte Bewegung, die mit der Be- oder Verarbeitungsmaschine realisiert werden soll. Eine Zielfunktion kann beispielsweise das Finden einer optimal steifen Stellung der Be- und Verarbeitungsmaschine für die gewünschte Be- oder Verarbeitungsfunktion, ein möglichst geringer Energieverbrauch und/oder dergleichen sein. Die Zielfunktion stellt demnach vorzugsweise darauf ab, einen zusätzlich zum Bewegungsablauf zu berücksichtigenden Parameter wie die Steifigkeit, den Energieverbrauch und/oder dergleichen durch Nutzung des zusätzlichen Freiheitsgrades zu optimieren. Somit geht ihre Bedeutung insbesondere über das reine Ermitteln von Bewegungsabläufen zur Ausführung der Bearbeitungsfunktion hinaus.

Sind mehrere Redundanzen vorhanden, so kann eine entsprechende Berechnung einer Bahnaufteilung auf beteiligte Geometrie- und/oder Maschinenachsen vorgenommen werden. Ist die Be- oder Verarbeitungsmaschine mehrfach überbestimmt, das heißt, sie enthält somit mehrere Redundanzen, so ist vorzugsweise für jede Redundanz eine entsprechende Bahnaufteilung auf die beteiligten Geometrie- und/oder Maschinenachsen vorzunehmen.

Vorzugsweise sind die folgenden Randbedingungen bei der Minimierung der Zielfunktion einzuhalten:

(1) Bahn- und orientierungstreues Verfahren, das heißt, sowohl die programmierte Bahn- als auch die Orientierung sollen eine vorgegebene Bahn- und Orientierungstoleranz nicht verletzen, und/oder

(2) Einhaltung von axialen Geschwindigkeits-, Beschleunigungs-, und Ruckgrenzen zwischen zwei aufeinanderfolgenden Bahnpunkten, um den programmierenden Bahnvorschub (technologischen Vorschub) aufrechtzuerhalten, und/oder

(3) Mindestabstand halten von axchsialen Softwarelimits und/oder

(4) Mindestabstand halten von Singularitäten, und/oder

(5) Einhaltung eines Mindestabstandes der einzelnen Gelenk-Maschinenachsen voneinander, von Gegenständen in der Umgebung und weiteren Robotern/Maschinen, und/oder

(6) Überprüfung, ob die unter den Randbedingungen (1) bis (5) ermittelte optimale Gelenkstellung kollisionsfrei angefahren werden kann. Dazu wird vorzugsweise ein steuerungsinternes oder externes Kollisionsmodell verwendet, welches die Kollision der Gelenke beziehungsweise Maschinenachsen untereinander und mit Gegenständen der Umgebung in Echtzeit überprüft.

Es ist vorzugsweise nicht das Ziel, den Hindernissen aktiv auszuweichen, sondern zu überprüfen, ob durch die redundanten Achsbewegungen zur Ermittlung einer optimalen Gelenkstellung und Ausgleichsbewegungen in den Gelenk- beziehungsweise Maschinenachsen auftreten, die zu einer Kollision untereinander oder mit Gegenständen in der Umgebung führen.

Die vorgenannten Randbedingungen sind lediglich exemplarisch angegeben. In konkreten Ausgestaltungen kann jede Zielfunktion unter den vorgenannten Randbedingungen sowie Kombinationen hiervon zum Zwecke der Optimierung ausgewählt werden. Die Erfindung bezieht sich somit insbesondere sowohl auf Roboter als auch auf Multiachsmaschinen, wie zum Beispiel 3-Linearachsen, 3-Rundachsen, oder dergleichen, mit wenigstens einer Redundanz. Die Reihenfolge der Achsen spielt dabei in der Regel keine Rolle, und es sind beliebige kinematische Anordnungen denkbar.

Mit der Erfindung kann eine virtuelle Steuerung erreicht werden. Damit ist eine Offline-Optimierung mit realem Steuerungsverhalten beziehungsweise realer Achsdynamik möglich. Insbesondere ist dadurch nicht mehr die Steuerungshardware die Leistungsgrenze, sondern die Leistungsgrenze eines jeweiligen Rechners, wie zum Beispiel des jeweiligen Personal Computers (PC), Notebooks oder dergleichen. Dadurch können auch sehr komplexe Optimierungsalgorithmen eingesetzt werden.

Die Erfindung basiert somit unter anderem darauf, eine Online-Berechnung von Bahn und Orientierung in einem Steuerungssystem TCP bereitzustellen. Singularitäten und Softwarelimits können unter Ausnutzung der mindestens einen Redundanz beziehungsweise redundanten Achse gezielt umfahren werden und es kann beispielsweise ein Abstand eines Endeffektors zu einem Fußpunkt, beispielsweise einem Roboterfußpunkt, der Be- oder Verarbeitungsmaschine minimiert werden, ohne dass eine Verletzung der ursprünglich programmierten Bahn und Orientierung (TCP) erforderlich ist. Die unter Ausnutzung der mindestens einen Redundanz neu ermittelten Achsstellungen können durch ein in der Steuereinheit online ermitteltes Kollisionsmodell oder durch ein Kollisionsmodell in einem CAM-System auf Kollisionsfreiheit geprüft werden. Dadurch kann das NC-Programm sowohl an der Steuereinheit direkt als auch in einem CAM-System unter Verwendung einer virtuellen Steuerung optimiert werden. Der Programmierer beziehungsweise Anwender braucht deshalb Roboter- und/oder mehrachsige Problemstellungen wie Singularitäten, Softwarelimits oder dergleichen inklusive einer Kollisionsprüfung nicht mehr zu berücksichtigen, wodurch sich das Einfahren eines komplexen Programms stark verkürzt.

Gemäß einer vorteilhaften Weiterbildung wird vorgeschlagen, dass die Zielfunktion unter Berücksichtigung von Eigenschaften der Bearbeitungsmaschine ermittelt wird. Durch diese Ausgestaltung können gezielt Eigenschaften der Bearbeitungsmaschine herangezogen werden, um die Zielfunktion zu definieren. Dadurch kann die wenigstens eine Redundanz dazu genutzt werden, eine weitere Optimierung unter Nutzung von Eigenschaften der Bearbeitungsmaschine erreichen zu können.

Vorteilhaft kann die Zielfunktion einen Energieverbrauch der Bearbeitungsmaschine und/oder eine Steifigkeit der Bearbeitungsmaschine umfassen. Die Zielfunktion kann natürlich auch weitere Eigenschaften der Bearbeitungsmaschine umfassen, die vorzugsweise auch zumindest teilweise kombiniert miteinander werden können. Dadurch ergibt sich eine umfassende Möglichkeit zur Optimierung der Funktion der Bearbeitungsmaschine.

Besonders vorteilhaft ist es, wenn das Minimieren der Zielfunktion ein Berücksichtigen einer Singularität der Bearbeitungsmaschine, eines räumlichen Hindernisses und/oder eine axialen Verfahrbereichsgrenze umfasst. Hierdurch kann eine weitere Optimierung hinsichtlich des Betriebs der Bearbeitungsmaschine erreicht werden.

Gemäß einer Weiterbildung wird vorgeschlagen, dass einzuhaltende Mindestabstände vorgesehen werden. Hierdurch kann eine zusätzliche Sicherheit während des bestimmungsgemäßen Betriebs der Bearbeitungsmaschine erreicht werden. Beispielsweise können die Sicherheitsabstände derart bemessen sein, dass Abmessungen des Endeffektors berücksichtigt sind. Insgesamt kann darüber hinaus die Ermittlung eines Bewegungsablaufs beziehungsweise einer Bahnkurve für den Endeffektor vereinfacht werden, weil räumliche Grenzen in Bezug auf die Bewegung des Endeffektors nicht separat berücksichtigt zu werden brauchen. Dadurch kann auch die Programmierung durch den Anwender weiter vereinfacht werden.

Gemäß einer weiteren Ausgestaltung wird vorgeschlagen, dass die erste Anzahl der durch die Maschinenachsen zur Verfügung bereitgestellten Freiheitsgrade ermittelt, mit der zweiten Anzahl der Freiheitsgrade verglichen und das Verfahren nur dann durchgeführt wird, wenn ein Vergleichsergebnis ergibt, dass die erste Anzahl größer ist als die zweite Anzahl. Dadurch kann erreicht werden, dass vor der Verfahrensdurchführung geprüft wird, ob überhaupt für die gewünschte Bearbeitung und den hierfür erforderlichen Bewegungsablauf eine hinreichende Anzahl an Freiheitsgraden der Bearbeitungsmaschine vorliegt. Diese Ausgestaltung prüft also, ob eine Mindestredundanz vorhanden ist, die zur Nutzung des erfindungsgemäßen Verfahrens in Bezug auf die Minimierung der Zielfunktion zur Verfügung steht.

Gemäß einer Weiterbildung umfasst das Verfahren auch folgende Schritte:

- Simulieren des Verfahrens auf einer Rechnereinheit zum Optimieren der Zielfunktion und Erzeugen der optimierten Maschinenachsenbewegungsdaten und
- Bereitstellen der erzeugten optimierten Maschinenachsenbewegungsdaten zum Steuern der Bearbeitungsmaschine.

Hierdurch ist es möglich, das Verfahren unabhängig von der Bearbeitungsmaschine zu simulieren. Durch die Steuereinheit vorgegebene Begrenzungen zum Durchführen des Minimierens oder Optimierens der Zielfunktion können dadurch umgangen werden, weil die Simulation auf einer nahezu beliebigen Rechnereinheit ausgeführt werden kann, insbesondere natürlich eine Rechnereinheit, die sich zum Durchführen von Simulationen besonders eignet. Dadurch kann eine Entkopplung von der tatsächlich durchzuführenden Bearbeitung und der Ermittlung der optimierten Maschinenbewegungsdaten erreicht werden. Es ist daher nicht mehr erforderlich, Randbedingungen aufgrund von Echtzeitanwendungen beim Optimieren zu beachten. Dadurch eröffnen sich neue Möglichkeiten für die Optimierung der Zielfunktion, die ansonsten zum Beispiel wegen zeitlicher Beschränkungen nicht realisiert werden könnten.

Die Simulation ermöglicht es ferner, das Optimieren der Zielfunktion losgelöst vom tatsächlich durchzuführenden Bearbeitungsvorgang durchzuführen und vorzugsweise in den einzelnen Schritten detailliert zu analysieren. Das Optimieren der Zielfunktion kann damit insgesamt genauer werden.

Die Ermittlung der optimierten Maschinenbewegungsdaten kann auch entfernt von der Bearbeitungsmaschine durchgeführt werden, wobei die ermittelten optimierten Maschinenbewegungsdaten beispielsweise über ein Kommunikationsnetzwerk, mittels eines Datenträger und/oder dergleichen an die Bearbeitungsmaschine übermittelt werden können. So kann durch Nutzung einer besonders leistungsfähigen externen Rechnereinheit ein Minimieren oder Optimieren der Zielfunktion unter Nutzung besonders aufwändiger Algorithmen erreicht werden, die mittels der Steuereinheit möglicherweise nicht ausführbar sind. Die Steuereinheit erhält beispielsweise die optimierten Maschinenbewegungsdaten von der Rechnereinheit und braucht selbst kein Minimieren beziehungsweise Optimieren der Zielfunktion durchführen. Dadurch lässt sich das Verfahren der Erfindung auch nachträglich in Verbindung mit bereits bestehenden Bearbeitungsmaschinen realisieren, deren Steuereinheiten lediglich eine begrenzte Rechenleistung bereitstellen.

Mit der Erfindung wird ferner ein Rechnerprogrammprodukt umfassend ein Programm für eine Rechnereinheit mit Programmkodeabschnitten eines Programms zum Ausführen der Schritte des Verfahrens gemäß der Erfindung vorgeschlagen, wenn das Programm durch die Rechnereinheit ausgeführt wird, so dass die Rechnereinheit wenigstens eine minimierte Zielfunktion ermittelt. Besonders vorteilhaft umfasst das Rechnerprogrammprodukt ein rechnerlesbares Medium, auf welchem die Programmkodeabschnitte gespeichert sind. Darüber hinaus kann das Programm direkt in einen internen Speicher der Rechnereinheit ladbar sein. So ist es beispielsweise möglich, das Programm aus einem Netzwerk von einer Datenquelle, beispielsweise einem Server, herunterzuladen und in einen internen Speicher der Rechnereinheit zu laden, so dass der Rechner das Programm ausführen kann. Vorzugsweise ist die Rechnereinheit in die Steuereinheit integriert angeordnet. Die Rechnereinheit kann auch zugleich die Steuereinheit bereitstellen.

Weitere Vorteile und Merkmale ergeben sich anhand von Ausführungsbeispielen, die im Folgenden anhand der Figuren beschrieben werden. In den Figuren bezeichnen gleiche Bezugszeichen gleiche Bauteile und Funktionen.

Es zeigen:

FIG 1    in schematischer perspektivischer Darstellung einen Roboter mit einem Endeffektor zur Bearbeitung eines Werkstücks,

FIG 2    eine schematische vergrößerte Darstellung im Bereich des Endeffektors gemäß FIG 1, wobei ausgewählte Punkte der Bearbeitung gekennzeichnet sind,

FIG 3    in schematischer Darstellung ein Balkendiagramm, in welchem Koeffizienten für Abweichungen aufgrund einer Krafteinwirkung an den in FIG 2 dargestellten Punkten entsprechend dargestellt ist,

FIG 4    in schematischer Darstellung eine erste Ausgestaltung für einen Roboter, der gemäß der Erfindung gesteuert wird, in einer schematisch perspektivischen Ansicht und

FIG 5    in schematischer Darstellung eine zweite Ausgestaltung für einen Roboter, der gemäß der Erfindung gesteuert wird, in einer schematisch perspektivischen Ansicht.

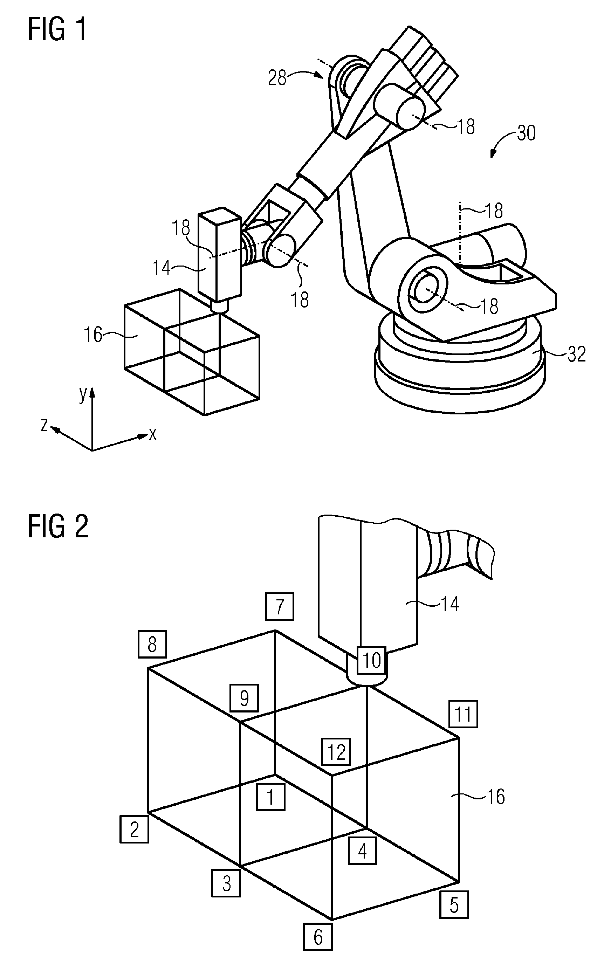

FIG 1 zeigt in einer schematisch perspektivischen Ansicht einen Roboter 30 als Bearbeitungsmaschine, der einen Fußpunkt 32 aufweist. Der Fußpunkt 32 ist ortsfest angeordnet und fixiert den Roboter 30 während seiner bestimmungsgemäßen Benutzung. Der Roboter 30 umfasst einen Roboterarm 28, der fünf einstellbare Maschinenachsen 18 aufweist, mittels denen entsprechend fünf Freiheitsgrade bereitgestellt werden. Endseitig ist ferner ein Endeffektor 14 vorgesehen, mittels dem die eigentliche Bearbeitung an einem Werkstück 16 durchgeführt wird. Aus FIG 1 ist ersichtlich, dass mit dem Effektor 14 das Werkstück 16 bearbeitet wird.

FIG 2 zeigt in schematischer Ansicht eine vergrößerte Darstellung aus FIG 1, bei der der Endeffektor 14 mit dem Werkstück 16 in Eingriff dargestellt ist. Darüber hinaus sind in der FIG 2 Bearbeitungspunkte mit den Ziffern 1 bis 12 gekennzeichnet.

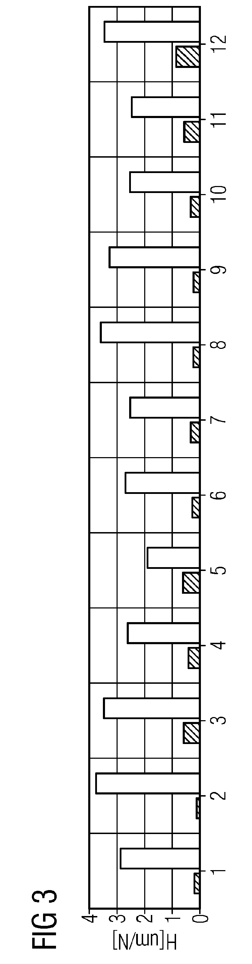

FIG 3 zeigt in schematischer Darstellung ein Balkendiagramm, mittels welchem Koeffizienten für Auswirkungen von Krafteinwirkungen an den in FIG 2 dargestellten Bearbeitungsstellen des Werkstücks 16 dargestellt sind. Auf der Abszisse sind mit den Nummern 1 bis 12 die entsprechenden Punkte der FIG 2 angegeben. Die Ordinate bezeichnet eine Größe H, in der die Koeffizienten bezüglich der Auswirkungen einer jeweiligen Krafteinwirkung mit jeweils einem Balken dargestellt sind. Die Einheit der Ordinate beträgt $\mu$m/N. Für jeden der Punkte gemäß FIG 2 sind zwei Balken in FIG 3 dargestellt. Ein ausgefüllter Balken bezieht sich auf eine Kraftwirkung in eine x-Richtung, wohingegen ein nicht ausgefüllter Balken sich auf eine Kraftwirkung in eine y-Richtung bezieht. Die FIG 3 zeigt also Koeffizienten, die es erlauben, bei einer vorgegebenen Krafteinwirkung eine entsprechende Weglängenänderung zu bewirken. Zu erkennen ist, dass die Koeffizienten in y-Richtung zu besonders signifikanten Änderungen der Weglänge bei einer entsprechenden Krafteinwirkung führen. Demzufolge sollten Kraftwirkungen bevorzugt werden, die in x-Richtung eingetragen werden können, weil diese zu erheblich kleineren Weglängenänderungen führen.

FIG 2 zeigt in einer schematisch perspektivischen Ansicht einen 6-Achs-Roboter 22, der zur Bearbeitung eines in einer Aufnahme 34 angeordneten Werkstücks 16 dient. Mit dem Endeffektor 14 wird im vorliegenden Fall eine Schleifbewegung entlang eines stirnseitigen inneren Umfangs des Werkstücks 16 vorgenommen. Zu diesem Zweck weist der Endeffektor 14 ein nicht weiter bezeichnetes rotierendes Schleifwerkzeug auf.

Der Roboter 22 weist einen Roboterarm 36 auf, der die sechs Maschinenachsen in Form von Maschinenachsen 18 und damit sechs Freiheitsgrade bereitstellt. Der Roboter ist wieder mit einem Fußpunkt 32 hinsichtlich seiner Position festgelegt. Eine Steuereinheit zur Steuerung des Roboters 22 ist durch die Steuereinheit 20 gebildet.

Der 6-achsige Roboterarm 36 hält vorliegend ein angetriebenes, rotationssymmetrisches Werkzeug zum Zwecke der Bearbeitung des Werkstücks 16. Dadurch liegt insgesamt eine einfache Redundanz hinsichtlich der Kinematik vor, weil nämlich für die eigentliche Bearbeitung lediglich fünf Freiheitsgrade erforderlich sind. Damit ist die erste Anzahl der durch die Maschinenachsen 18 bereitgestellten Freiheitsgrade um 1 höher als die Anzahl der Freiheitsgrade, die für die Bearbeitung erforderlich sind.

Es ergibt sich, dass sowohl die Anzahl der Maschinenachsen 18 beziehungsweise die hierdurch bereitgestellten Freiheitsgrade als auch die Anzahl der Freiheitsgrade immer ganzzahlig sein muss.

Ein NC-Programm für den Roboter 22 umfasst vorliegend Maschinendaten X, Y, Z, A3, B3, C3, $\theta$. Als Randbedingung wird vorgegeben, dass die Bahn (X, Y, Z, A3, B3, C3) nicht verletzt beziehungsweise verändert werden soll. Da das Werkzeug selbst im Endeffektor 14 rotationssymmetrisch ist, erfordert die Bewegungsaufgabe, nämlich TCP zu positionieren und zu orientieren, lediglich fünf Freiheitsgrade. Der Roboter 22 verfügt jedoch über sechs Maschinenachsen, das heißt, sechs Freiheitsgrade, und zusätzlich um eine Drehbewegungsmöglichkeit des angetriebenen Werkzeugs im Endeffektor 14. Eine Drehung des Werkzeugs um einen Winkel ($\theta$) führt demzufolge zu keiner Konturverletzung. Dieselbe Lage des Werkzeugs, hier ein Fräswerkzeug, kann durch verschiedene Stellungen der sechs Maschinenachsen 18 erreicht werden. Es steht somit ein zusätzlicher Freiheitsgrad zur Verfügung ($\theta$), um Singularitäten und/oder Softwarelimits gezielt zu umfahren, oder um eine mechanisch steifere Positionierung ausbilden zu können. Als Zielfunktion kann vorgesehen sein, lediglich Singularitäten und/oder Softwarelimits umfahren zu können oder auch lediglich die Steifigkeit zu erhöhen. Darüber hinaus kann natürlich auch eine Optimierung bezüglich beider Parameter vorgesehen sein.

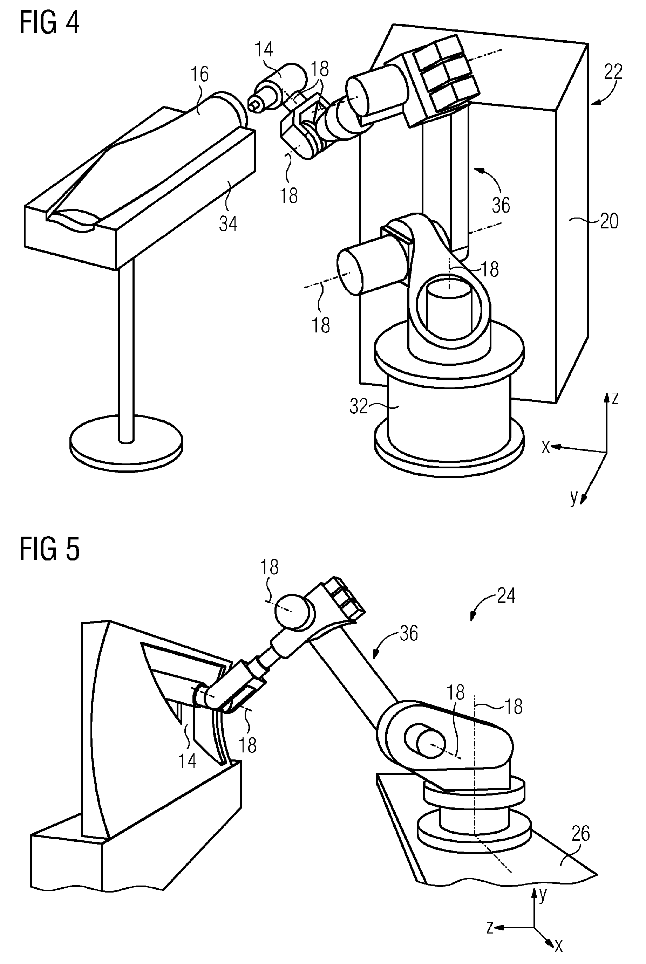

FIG 5 zeigt eine zweite Ausgestaltung für einen Roboter 24 gemäß der Erfindung. Auch dieser Roboter 24 weist einen Roboterarm 36 mit sechs Maschinenachsen 18 auf, die jedoch nicht sämtlich in FIG 5 ersichtlich sind. Somit stellt der Roboterarm 36 sechs Freiheitsgrade bereit. Darüber hinaus ist - im Unterschied zur Ausgestaltung gemäß FIG 1 - der Roboter 24 auf einer Linearachse 26 angeordnet. Damit wird insgesamt eine kinematische Redundanz ausgebildet.

Im vorliegenden Ausführungsbeispiel umfasst das NC-Programm: X11, X, Y, Z, A3, B3, C3, θ. Die Randbedingung ist im vorliegenden Fall dadurch gegeben, dass die Bahn (X', Y, Z, A3, B3, C3, θ) nicht verletzt beziehungsweise nicht verändert werden soll. Im vorliegenden Fall ist das Werkzeug nicht rotationssymmetrisch. Es gilt ferner die Bedingung

$$X'=X11+X.$$

Die Bewegungsaufgabe, nämlich TCP zu positionieren und zu orientieren, erfordert im vorliegenden Fall sechs Freiheitsgrade. Es stehen jedoch sieben Maschinenachsen 18 mit sieben Freiheitsgraden zur Verfügung.

Die Redundanz entsteht durch die Linearachse X11, auf der der Roboter 24 längsverschieblich angeordnet ist. Dadurch steht ein zusätzlicher Freiheitsgrad zur Verfügung, um Singularitäten und/oder Softwarelimits zu umfahren, oder um eine steifere Position auszubilden. Fährt zum Beispiel die X11-Achse den Fußpunkt 32 des Roboters 24 in die eine Richtung, so erfordert dies ein Verfahren der Roboterkinematik im Anschluss entsprechend der Differenz, und zwar

$$X=X'-X11.$$

Unter Berücksichtigung von zuvor ermittelten Parametern, wie anhand von FIG 2 dargestellt, kann somit zum Beispiel eine besonders hohe Steifigkeit des Roboterarms 36 erreicht werden. Es wird eine Zielfunktion ausgebildet, bei der durch Variation der entsprechenden Maschinenachsen 18 iterativ eine Minimierung der Kraftauswirkungen und damit eine Maximierung der Steifigkeit erreicht werden kann. Dabei ist es ausreichend, wenn ein lokales Maximum der Steifigkeit erreicht wird. Im Übrigen können hierzu iterative Methoden der Analysis ergänzend eingesetzt werden.

Die Beschreibung der Ausführungsbeispiele dient lediglich der Erläuterung der Erfindung und soll diese nicht beschränken. Insbesondere können natürlich Merkmale in nahezu beliebigen Kombinationen miteinander kombiniert werden, um zu neuen Varianten im Sinne der Erfindung gelangen zu können. Darüber hinaus können natürlich Vorrichtungsmerkmale auch als Verfahrensmerkmale und umgekehrt formuliert sein.

**Patentansprüche**

1. Verfahren zum Steuern einer Bearbeitungsmaschine (30) mit einstellbaren Maschinenachsen (18), welche eine erste Anzahl von Freiheitsgraden ermöglichen, wobei das Verfahren die Schritte umfasst:

   - Erfassen von Steuerdaten für einen vorgegebenen Bewegungsablauf eines Endeffektors (14) der Bearbeitungsmaschine (30), wobei der vorgegebene Bewegungsablauf eine zweite Anzahl von Freiheitsgraden der Bearbeitungsmaschine (30) erfordert, wobei die zweite Anzahl kleiner als die erste Anzahl ist,
   - Ermitteln von Maschinenachsenbewegungsdaten für die Bewegung der Maschinenachsen (18) zum Bereitstellen des vorgegebenen Bewegungsablaufs des Endeffektors (14) und
   - Ausführen des vorgegebenen Bewegungsablaufs des Endeffektors (14) anhand der Maschinenachsenbewegungsdaten,

   **dadurch gekennzeichnet,**
   **dass** das Verfahren die folgenden Schritte umfasst:

   - Erstellen einer Zielfunktion,
   - Optimieren der Zielfunktion durch Verändern wenigstens einzelner der Maschinenachsenbewegungsdaten,
   - Erzeugen von optimierten Maschinenachsenbewegungsdaten und
   - Ausführen des vorgegebenen Bewegungsablaufs des Endeffektors (14) anhand der optimierten Maschinenachsenbewegungsdaten.

2. Verfahren nach Anspruch 1, **dadurch gekennzeichnet, dass** die Zielfunktion unter Berücksichtigung von Eigenschaften der Bearbeitungsmaschine (30) ermittelt wird.

3. Verfahren nach Anspruch 1 oder 2, **dadurch gekennzeichnet, dass** die Zielfunktion einen Energieverbrauch der Bearbeitungsmaschine (30) und/oder eine Steifigkeit der Bearbeitungsmaschine (30) umfasst.

4. Verfahren nach einem der Ansprüche 1 bis 3, **dadurch gekennzeichnet, dass** das Optimieren der Zielfunktion ein Berücksichtigen einer Singularität der Bearbeitungsmaschine (30), eines räumlichen Hindernisses und/oder einer axialen Verfahrbereichsgrenze umfasst.

5.  Verfahren nach Anspruch 4, **dadurch gekennzeichnet, dass** einzuhaltende Mindestabstände vorgesehen werden.

6.  Verfahren nach einem der Ansprüche 1 bis 5, **dadurch gekennzeichnet, dass** die erste Anzahl der Maschinenachsen (18) ermittelt, mit der zweiten Anzahl der Freiheitsgrade verglichen und das Verfahren nur dann durchgeführt wird, wenn ein Vergleichsergebnis ergibt, dass die erste Anzahl größer ist als die zweite Anzahl.

7.  Verfahren nach einem der Ansprüche 1 bis 6, **gekennzeichnet durch** folgende Schritte:

    - Simulieren des Verfahrens auf einer Rechnereinheit zum Optimieren der Zielfunktion und Erzeugen der optimierten Maschinenachsenbewegungsdaten und
    - Bereitstellen der erzeugten optimierten Maschinenachsenbewegungsdaten zum Steuern der Bearbeitungsmaschine (30).

8.  Rechnerprogrammprodukt umfassend ein Programm für eine Rechnereinheit (20) mit Programmkodeabschnitten eines Programms zum Ausführen der Schritte eines Verfahrens nach einem der vorhergehenden Ansprüche, wenn das Programm durch die Rechnereinheit (20) ausgeführt wird, sodass die Rechnereinheit (20) wenigstens eine optimierte Zielfunktion ermittelt.

9.  Rechnerprogrammprodukt nach Anspruch 8, **dadurch gekennzeichnet, dass** das Rechnerprogrammprodukt ein rechnerlesbares Medium umfasst, auf welchem die Programmkodeabschnitte gespeichert sind.

10. Steuereinheit (20) zum Steuern einer Bearbeitungsmaschine (30) mit einstellbaren Maschinenachsen (18), welche eine erste Anzahl von Freiheitsgraden ermöglichen, wobei die Steuereinheit eingerichtet ist, Steuerdaten für einen vorgegebenen Bewegungsablauf eines Endeffektors (14) der Bearbeitungsmaschine (30) zu erfassen, wobei der vorgegebene Bewegungsablauf eine zweite Anzahl von Freiheitsgraden der Bearbeitungsmaschine (30) erfordert, wobei die zweite Anzahl kleiner als die erste Anzahl ist, wobei die Steuereinheit (20) ferner eingerichtet ist, Maschinenachsenbewegungsdaten für die Bewegung der Maschinenachsen (18) zum Bereitstellen des vorgegebenen Bewegungsablaufs des Endeffektors (14) zu ermitteln und den vorgegebenen Bewegungsablauf des Endeffektors (14) anhand der Maschinenachsenbewegungsdaten ausführen,

    **dadurch gekennzeichnet,**

    **dass** Steuereinheit (20) eingerichtet ist, eine Zielfunktion zu erstellen, die Zielfunktion durch Verändern wenigstens einzelner der Maschinenachsenbewegungsdaten zu optimieren, optimierte Maschinenachsenbewegungsdaten zu erzeugen und den vorgegebenen Bewegungsablauf des Endeffektors (14) anhand der optimierten Maschinenachsenbewegungsdaten ausführen.

11. Bearbeitungsmaschine (30) mit einstellbaren Maschinenachsen (18), welche eine erste Anzahl von Freiheitsgraden ermöglichen, sowie einer Steuereinheit (20),

    **dadurch gekennzeichnet,**

    **dass** die Steuereinheit (20) gemäß Anspruch 10 ausgebildet ist.

FIG 1

FIG 2

FIG 3

FIG 4

FIG 5

Europäisches Patentamt

European Patent Office

Office européen des brevets

**EUROPÄISCHER RECHERCHENBERICHT**

Nummer der Anmeldung

EP 15 15 1286

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | HIRAKAWA A R ET AL: "Trajectory generation for redundant manipulators under optimization of consumed electrical energy", CONFERENCE RECORD OF THE 1996 IEEE INDUSTRY APPLICATIONS CONFERENCE - 31ST IAS ANNUAL MEETING, IEEE SERVICE CENTER, US, Bd. 3, 6. Oktober 1996 (1996-10-06), Seiten 1626-1632, XP010201236, DOI: 10.1109/IAS.1996.559286 ISBN: 978-0-7803-3544-8 * Zusammenfassung * * Abbildung 1 * * Absätze [0001] - [0004] * ----- | 1-11 | INV. B25J9/16 |
| X,D | AT 401 746 B (KASTENMEIER THOMAS) 25. November 1996 (1996-11-25) * Zusammenfassung * * Abbildung 1 * * Seite 3, Zeile 20 - Seite 5, Zeile 15 * ----- | 1-11 | RECHERCHIERTE SACHGEBIETE (IPC) |
| X | JANKOWSKI K P ET AL: "Inverse dynamics control of multiple robot arms with flexible joints", PROCEEDINGS OF THE INTERNATIONAL CONFERENCE ON ROBOTICS AND AUTOMATION ATLANTA, MAY 2 - 6, 1993; [PROCEEDINGS OF THE INTERNATIONAL CONFERENCE ON ROBOTICS AND AUTOMATION], LOS ALAMITOS, IEEE COMP. SOC. PRESS, US, Bd. CONF. 10, 2. Mai 1993 (1993-05-02), Seiten 996-1003, XP010095025, DOI: 10.1109/ROBOT.1993.291818 ISBN: 978-0-8186-3450-5 * Zusammenfassung * * Abbildung 1 * * Absätze [0003], [0004] * ----- -/-- | 1-11 | B25J G05B |

Der vorliegende Recherchenbericht wurde für alle Patentansprüche erstellt

| Recherchenort | Abschlußdatum der Recherche | Prüfer |
|---|---|---|
| Den Haag | 15. Juni 2015 | Hageman, Elodie |

EPO FORM 1503 03.82 (P04C03)

Europäisches Patentamt

European Patent Office

Office européen des brevets

## EUROPÄISCHER RECHERCHENBERICHT

**Nummer der Anmeldung**

EP 15 15 1286

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2012/143044 A1 (ABB RESEARCH LTD [CH]; STRANDBERG MORTEN [SE]) 26. Oktober 2012 (2012-10-26) * Zusammenfassung * * Abbildung 1 * * Seite 1, Zeile 35 - Seite 2, Zeile 20 * * Seite 9, Zeile 30 - Seite 19, Zeile 26 * ----- | 1,4-11 | |
| A | DAN ZHANG ET AL: "A Comparison Study of Three Degree-of-Freedom Micro-motion Parallel Kinematic Machines with/without Actuation Redundancy", MANUFACTURING AUTOMATION (ICMA), 2010 INTERNATIONAL CONFERENCE ON, IEEE, PISCATAWAY, NJ, USA, 13. Dezember 2010 (2010-12-13), Seiten 239-245, XP031855263, ISBN: 978-1-4244-9018-9 * Zusammenfassung * * Abbildung 1 * * Absätze [000I], [00IV] * ----- | 1-11 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 15. Juni 2015 | Hageman, Elodie |

**ANHANG ZUM EUROPÄISCHEN RECHERCHENBERICHT**
**ÜBER DIE EUROPÄISCHE PATENTANMELDUNG NR.**

EP 15 15 1286

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-06-2015

| Im Recherchenbericht angeführtes Patentdokument | Datum der Veröffentlichung | Mitglied(er) der Patentfamilie | Datum der Veröffentlichung |
|---|---|---|---|
| AT 401746 B | 25-11-1996 | KEINE | |
| WO 2012143044 A1 | 26-10-2012 | CN 103492133 A | 01-01-2014 |
| | | EP 2699392 A1 | 26-02-2014 |
| | | WO 2012143044 A1 | 26-10-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 401746 B